# EUROPÄISCHE PATENTANMELDUNG

(11) **EP 1 628 064 A2**
(43) Veröffentlichungstag der Anmeldung: **22.02.2006**
(21) Anmeldenummer: 05017697.3
(22) Anmeldetag: 13.08.2005
(51) Int. Cl.: F16L 33/02

(54) **Schlauchverbindung**

(30) Priorität: 20.08.2004 DE 102004040348
(71) Anmelder: DaimlerChrysler AG, 70567 Stuttgart (DE)
(72) Erfinder: Ammon, Günter, 89198 Westerstetten (DE); Eberhard, Walter, 89233 Neu-Ulm (DE); Merz, Matthias, 75365 Calw (DE)

(57) **Zusammenfassung**

Um eine Schlauchverbindung für ein Schlauchsystem zu schaffen, die derart gestaltet ist, dass das Schlauchsystem zuverlässig dich ist, wird vorgeschlagen bei einer Schlauchverbindung mit einem Rohr (1), einem auf das Ende des Rohres (1') abgesteckten Schlauches (4) sowie ein Verbindungselement (3) zum Aufbringen einer Flächenpressung zwischen Rohr (1) und Schlauch (4), wobei auf dem Rohr (1) mehrere radial verlaufende Sicken (2a, 2b) vorgesehen, wird vorgeschlagen, dass die benachbart dem Rohrende (1') angeordnete Sicke (2a) einen größeren Sickendurchmesser hat als die Folgesicken (2b).

## Beschreibung

Die Erfindung betrifft eine Schlauchverbindung gemäß dem Oberbegriff des Patentanspruchs 1.

Zur Verbesserung einer Verbindung eines Rohres mit einem Schlauch ist es bekannt, das Rohr mit einer Sicke zu versehen, die benachbart zum Ende des Rohres angeordnet ist. Hierzu wird auf die deutsche Industrienorm DIN 71 550 von Juli 1979 verwiesen. Aus dieser Norm gehen geometrische Abmessungen einer Sicke am Ende eines Rohres für eine Schlauchverbindung hervor. Die Norm definiert insbesondere den Sickendurchmesser im Verhältnis zum Rohraußendurchmesser.

Weiterhin ist aus der DE 42 23 250 A1 eine Schlauchverbindung bestehend aus einem Rohr sowie einem Schlauch bekannt, die mittels eines Schlauchnippels hergestellt wird. Der Schlauchnippel ist im Bereich der Schlauchverbindung innerhalb von Rohr und Schlauch angeordnet. Auf seinem in dem Schlauch befindlichen Ende sind auf dem Umfang des Schlauchnippels mehrere radial verlaufende Halterippen vorgesehen. Die Halterippen sind auf dem Umfang des Schlauchnippels angeordnet. Der Innendurchmesser des Schlauchnippels ist über die gesamte Länge des Nippels konstant.

Der vorliegenden Erfindung liegt die Aufgabe zu Grunde, eine Schlauchverbindung für ein Schlauchsystem zu schaffen, die derart gestaltet ist, dass das Schlauchsystem zuverlässig dicht ist.

Diese Aufgabe wird durch eine Schlauchverbindung mit den Merkmalen des Hauptanspruches gelöst.

Demnach zeichnet sich die Erfindung dadurch aus, dass auf dem Ende eines Rohres, auf dem ein Schlauch aufgesteckt wird, mehrere Sicken vorgesehen sind, wobei die Sicke, die benachbart zum Rohrende angeordnet ist, einen größeren Sickendurchmesser aufweist, als die sich daran anschließenden Folgesicken. Die Erfindung bringt den Vorteil mit sich, dass durch die Anordnung mehrere Sicken nebeneinander die radial das Rohrende umlaufen, eine Versteifung im Bereich der Schlauchverbindung erfolgt. Diese Versteifung über die Anordnung der Sicken führt dazu, dass die Wandstärke des Rohres insgesamt reduziert werden kann. Gleichzeitig ist die erforderliche Dichtheit des Schlauchsystems gegeben, da sich das Rohr beim Verbinden mit dem Schlauch, was beispielsweise mit Hilfe einer Rohrschelle erfolgen kann, nicht plastisch verformt. Dadurch kann das Gewicht der eingesetzten Rohre erheblich reduziert werden. Die Gewichtsreduzierung wirkt sich positiv sowohl auf die Materialkosten als auch auf die Herstellungskosten aus.

Bevorzugte Ausführungsbeispiele sind den Unteransprüchen zu entnehmen.

Es ist denkbar, dass als Verbindungselement zwischen Rohr und Schlauch eine einfach spannbares und lösbares Verbindungselement verwendet werden kann. Dadurch besteht die Möglichkeit, die Schlauchverbindung bei Bedarf, z. B. für Wartung und/oder Reparaturmaßnahmen, wieder zu lösen und erneut zu befestigen. Vorzugsweise ist vorgesehen, dass eine Rohrschelle als Verbindungselement verwendet wird. Bei einer Rohrschelle handelt es sich um ein Standardbauteil, welches aus einem Spannband und einer Spannvorrichtung besteht und günstig zu beschaffen ist und sich somit auch positiv auf die Herstellungskosten auswirkt.

Die Folgesicken, die sich der Sicke anschließen, die benachbart zum Rohrende angeordnet ist, können jeweils den gleichen Sickendurchmesser aufweisen. Das bringt wiederum Vorteile bei der Herstellung der erfindungsgemäßen Schlauchverbindung mit sich, weil dadurch für jede Sicke derselbe Fertigungsschritt durchgeführt werden kann.

Das gleiche gilt für das Merkmal, wonach die Folgesicken jeweils den gleichen Abstand zueinander haben können. Auch diese Ausgestaltung des Rohres bringt erhebliche Vorteile beim Herstellungsprozess mit sich.

Weiterhin ist es denkbar, dass der Abstand zwischen der ersten Sicke und den Folgesicken größer ist als der Abstand zwischen den einzelnen Folgesicken.

Gemäß einer weiteren Ausführungsform ist der Abstand, den die Folgesicken zueinander haben, kleiner als die Breite des Verbindungselementes zum Aufbringen einer Flächenpressung zwischen Rohr und Schlauchende. Dadurch wird sichergestellt, dass sich immer mindestens eine Sicke unterhalb des Verbindungselementes befindet. Hierdurch erhöht sich die lokale Flächenpressung zwischen Schlauch und Rohrende, wodurch sich wiederum die auf die Schlauchverbindung durch das Verbindungselement aufzubringende Kraft erheblich reduziert. So kann z. B. das notwendige Anzugsmoment des Spannbandes einer Rohrschelle bei gleicher Dichtheit kleiner ausfallen. Dadurch wird der Einsatz von Rohren ermöglicht, die zumindest im Bereich der Sicken nur eine geringe Wandstärke aufweisen müssen.

Weiterhin ist es denkbar, dass der Innendurchmesser des Rohres auf Höhe der Sicken nicht konstant ist. Insbesondere ist es denkbar, dass der Innendurchmesser des Rohres auf Höhe einer Sicke größer ist als im übrigen Bereich des Rohres. Durch diese Ausgestaltung erhöht sich die Steifigkeit des Rohres, was zu den im Zusammenhang mit dem Hauptanspruch erläuterten Vorteilen beiträgt und diese verstärkt.

Die Sicken können beispielsweise durch Umformen des Rohres hergestellt werden. In diesem Zusammenhang sind Umformverfahren, wie Drücken, Innenhochdruckumformen, Pressen oder Prägen zu nennen.

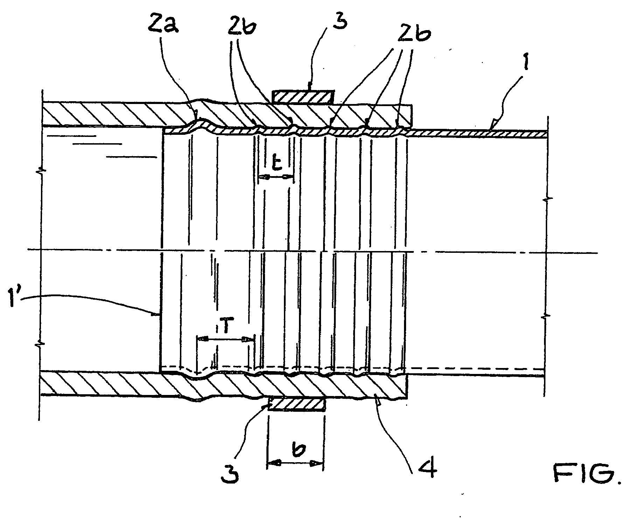

Die Erfindung wird nun anhand des in der Figur dargestellten Ausführungsbeispiels erläutert, welches eine erfindungsgemäße Schlauchverbindung im Querschnitt zeigt.

In der Figur ist ein Rohr 1 dargestellt, dessen Ende 1' in einem Schlauch 4 angeordnet ist. Das Rohr 1 weist benachbart zu dem Ende 1' eine Sicke 2a auf. Diese Sicke hat einen definierten nicht dargestellten Sickendurchmesser. An die Sicke 2a schließen sich in dem gezeigten Ausführungsbeispiel fünf Folgesicken 2b an. Die Folgesicken 2b weisen ebenfalls einen definierten Sickendurchmesser auf. Der Sickendurchmesser der Folgesicken 2b ist ebenfalls nicht dargestellt. Er ist jedoch für jede Folgesicke 2b derselbe.

Die Folgesicken 2b sind in einem Abstand t voneinander angeordnet. Der Abstand t zwischen den Folgesicken 2b ist konstant. Die Folgesicken 2b sind jedoch in einem Abstand T von der ersten Sicke 2a angeordnet, der größer ist als der Abstand zwischen den Folgesicken t untereinander.

Der Schlauch 4 erstreckt sich bis über die letzte Folgesicke 2b über das Rohr. Zur Herstellung einer dichten Verbindung zwischen Rohr 1 und Schlauch 4 ist ein Spannband 3 vorgesehen. Das Spannband 3 weist eine Breite b auf. Die Breite b ist größer als der Abstand t der Folgesicken 2b zueinander. Damit ist sichergestellt, dass sich immer mindestens eine der Folgesicken 2b unterhalb des Spannbandes 3 befindet. Hierdurch erhöht sich die lokale Flächenpressung zwischen Schlauch 4 und Rohr 1. Das hat zur Folge, dass das Anzugsmoment des Spannbandes 3 nicht so hoch gewählt werden muss.

Durch die erfindungsgemäße Anordnung der Sicken 2a und 2b auf dem Rohr 1 wird dieses versteift, was dazu führt, dass die Wandstärke des Rohres 1 reduziert werden kann, ohne das sich das Rohr 1 plastisch verformen würde, wenn ein Anzugsmoment auf ein Spannband 3 aufgebraucht wird. Da sich immer eine Sicke der Folgesicken 2b unterhalb des Spannbandes 3 befindet, ist sichergestellt, dass die lokale Dichtkraft zwischen Schlauch 4 und Rohr 1 ausreichend hoch ist. Insgesamt können durch die erfindungsgemäße Anordnung die Materialkosten erheblich reduziert werden.

## Patentansprüche

1. Schlauchverbindung mit
einem Rohr (1), einem auf das Ende des Rohres (1') aufgesteckten Schlauch (4), wobei auf dem Rohr (1) mehrere radial umlaufende Sicken (2a, 2b) vorgesehen sind,
**dadurch gekennzeichnet,**
**dass** die benachbart dem Rohrende (1') angeordnete Sicke (2a) einen größeren Sickendurchmesser hat als die Folgesicken (2b) und ein Verbindungselement (3) zum Aufbringen einer Flächenpressung zwischen Rohr (1) und Schlauch (4), vorgesehen ist, wobei zur Erhöhung der Flächenpressung zwischen Rohr (1) und Schlauch (4) der Abstand (t), den die Folgesicken (2b) zueinander haben kleiner ist als das Verbindungselement breit ist.

2. Schlauchverbindung nach Anspruch 1,
**dadurch gekennzeichnet,**
**dass** das Verbindungselement eine Rohrschelle mit einem Spannband (3) ist.

3. Schlauchverbindung nach Anspruch 1 oder 2,
**dadurch gekennzeichnet,**
**dass** die Folgesicken (2b) jeweils den gleichen Sickendurchmesser aufweisen.

4. Schlauchverbindung nach einem der vorhergehenden Ansprüche,
**dadurch gekennzeichnet,**
**dass** die Folgesicken (2b) jeweils den gleichen Abstand (t) zueinander haben.

5. Schlauchverbindung nach einem der vorhergehenden Ansprüche,
**dadurch gekennzeichnet,**
**dass** der Abstand (t) der Folgesicken (2b) zur ersten Sicke (2a) größer ist als der Abstand (t), den die Folgesicken (2b) zueinander haben.

6. Schlauchverbindung nach einem der vorhergehenden Ansprüche,
**dadurch gekennzeichnet,**
**dass** der Innendurchmesser des Rohres (1) im Bereich der Sicken (2a, 2b) nicht konstant ist.

7. Schlauchverbindung nach einem der vorhergehenden Ansprüche,
**dadurch gekennzeichnet,**
**dass** der Innendurchmesser des Rohres (1) auf Höhe einer Sicke größer ist als im übrigen Bereich des Rohres.

8. Schlauchverbindung nach einem der vorhergehenden Ansprüche,
**dadurch gekennzeichnet,**
**dass** die Sicken (2a, 2b) durch Umformen des Rohres (1) hergestellt sind.
